# EUROPEAN PATENT SPECIFICATION

(11) **EP 2 768 693 B1**
(45) Date of publication and mention of the grant of the patent: **29.05.2019**
(21) Application number: 12788132.4
(22) Date of filing: 05.10.2012
(51) Int. Cl.: B60L 11/18

(54) **METHOD, SYSTEM AND CHARGING STATION FOR CHARGING ELECTRIC VEHICLES**
VERFAHREN, SYSTEM UND LADESTATION ZUM AUFLADEN VON ELEKTROFAHRZEUGEN
PROCÉDÉ, SYSTÈME ET STATION DE CHARGE POUR CHARGER DES VÉHICULES ÉLECTRIQUES

(30) Priority: 19.10.2011 EP 11185771
(43) Date of publication of application: 27.08.2014
(73) Proprietor: NEC Corporation, Tokyo 108-8001 (JP)
(72) Inventor: SCHUELKE, Anett, 69251 Gaiberg (DE); BODET, Cédric, 81825 München (DE); JABLONOWSKI, Rafal, 30324 Krakow (PL)
(74) Representative: Patent- und Rechtsanwälte Ullrich & Naumann
(86) International application number: PCT/EP2012/069789
(87) International publication number: WO 2013/056990

(56) References cited:
- US-A1- 2009 210 357
- US-A1- 2011 127 944
- US-B1- 6 941 197

## Description

The invention relates to a method for charging electric vehicles by a charging station having a plurality of electric vehicle supply equipment for charging.

The invention relates also to a charging station for charging electric vehicles, preferably for performing with the method according to one of the claims 1-11.

The invention further relates to a system for charging electric vehicles.

Electrification of transportation and individual traffic as been seen as a sustainable way of future mobility due to the limiting availability of fossil fuels and as a consequence of rising fuel costs. Hybrid and fully electrified vehicles, in the following summarized as electric vehicles will play therefore a substantial role in the future. Electric vehicles are usually equipped with an electric drive motor and an on-vehicle battery instead of a combustion engine with a fuel tank in conventional vehicles. To charge the battery of an electric vehicle the battery must be plugged into a corresponding charging device, for example a power socket in a garage or on a parking spot instead of refuelling a fuel tank at a gas station.

However, compared to conventional vehicles with a combustion engine, electric vehicles need much more time to be fully recharged. For example a Nissan Leaf has 24 kWh, which either needs a long time when connected to usual power outlets at home or requires a strong peaked power profile to be recharged within a short time of a about 15 to 30 minutes. Such profiles are provided by a high power connectivity, for example DC Mode 4"providing 44kW in the European Union or Mode 4"(ChaDeMo) providing 50kW in Japan.

Due the longer "refuelling" i.e. recharging process of electric vehicles and various types of batteries with which the electric vehicles are equipped parking spots or car parks require also various types of charging devices, so that at least a majority of electric cars may be recharged. Instead of a simple first-in-first-out (FIFO) based assignment of electric vehicles to electric vehicle supply equipment of a charging station US 2011/0127944 A1 shows a system to provide a parking and a power charging system for a car park equipped with an electric power source and various types of charging devices having a different charging performance. Further the system comprises parking state detection means configured to detect whether or not an electric vehicle is parked in each of the parking spaces. Assignment means are configured to assign a ranking of charging performance to each of the empty parking spaces detected by the parking state detection means. Empty parking spaces with a higher charging performance have thus a higher ranking of charging performance on the basis of descending order of charging performance of the charging devices. The system further comprises communication means configured to communicate with an on-vehicle communication unit mounted on the arriving vehicle in order to obtain vehicle parameters stored in the arriving electric vehicle every time the arriving electric vehicle arrives at the car park. Further parking space instruction means are configured to select one of the empty parking spaces using the ranking of the charging performance assigned by the assignment means on the basis of the obtained vehicle parameters which indicate the residual power of the on-vehicle battery, the necessity to charge the on-vehicle battery, the charging capacity of the on-vehicle battery and the degree to easily charge the on-vehicle battery mounted on the arriving electric vehicle. The parking space instruction means are further configured to instruct the arriving vehicle to move and to be parked in the selected empty parking space.

However, the system according to US 2011/0127944 A1 is limited to an amount of electric vehicles being equal to or smaller than the amount of parking spaces of the car park. If the electric vehicle is parked in an empty parking place the parked electric vehicle is charged on the basis of and according to the vehicle parameters. A further problem is, that, for example, different battery types in electric vehicles need different charging cycles to obtain a maximum lifetime and/or a maximum capacity of the on vehicle battery.

It is therefore an objective of the present invention to provide a charging station and a system and a method for charging electric vehicles which are more flexible.

It is a further objective of the present invention to provide a charging sation and a method and a system for charging electric vehicles which enable instant charging depending with desire of continuation of a user's travel with an electric vehicle.

It is even further objective of the present invention to provide a charging station and a method and a system for charging electric vehicles which are easy to implement and cost-effective.

In accordance with the invention the aforementioned objectives are accomplished according to claim 1 by a method for charging electric vehicles by a charging station having a plurality of electric vehicle supply equipment for charging.

According to this claim 1 such a method is characterized by the steps of
a) Determining charging information of the electric vehicles,
b) Determining charging power information of the charging station,
c) Determining charging power information of each electric vehicle supply equipment,
d) Calculating a plurality of future charging profiles for the charging station based on the determined charging power information of step b) and step c) and the determined charging information of step a),
e) Selecting one calculated future charging profile according to at least one optimization parameter,
f) Determining a sequence of electric vehicles for at least one electric vehicle supply equipment, wherein the sequence based on the selected future charging profile,
g) Assigning the electric vehicles according to the corresponding determined sequence to the corresponding electric vehicle supply equipment and
h) Charging the electric vehicles by the assigned electric vehicle supply equipment according to the determined charging information of the electric vehicles and the determined charging power information of the assigned electric vehicle supply equipment.

In accordance with the invention the aforementioned objectives are also accomplished according to claim 12 by a charging station for charging electric vehicles, preferably for performing with the method according to one of the claims 1-11.

According to this claim 12 such a charging station is characterized by
a) a plurality of electric vehicle supply equipment for charging electric vehicles,
b) determining means for determining charging information of the electric vehicles, for determining charging power information of the charging station, and for determining charging power information of each electric vehicle supply equipment,
c) calculation means for calculating a plurality of charging profiles for the charging station based on the determined charging power information and the determined charging information,
d) selection means for selecting one calculated future charging profile according to at least one optimization parameter,
e) sequence means for determining a sequence of electric vehicles for at least one electric vehicle supply equipment, wherein the sequence based on the selected future charging profile,
f) assigning means for assigning the electric vehicles according to the corresponding determined sequence to the corresponding electric vehicle supply equipment,

In accordance with the invention the aforementioned objectives are further accomplished by a system for charging electric vehicles, preferably for performing with the method according to one of the claims 1-11, comprising a charging station according to one of the claims 12-14 and a power supply grid, connected via a single connection to the charging station, preferably wherein the power supply grid supplies at least partially power of renewable energies to the charging station.

The invention enables a plurality of electric cars to be charged at a charging station with a constant number of electric vehicle supply equipment, allowing a dynamic queuing of electric vehicles or priorisation of electric vehicles to be charged at the charging station. Dynamic queuing means in particular reordering of the sequence of electric vehicles to be charged by the different electric vehicle supply equipment.

According to the invention it has first been recognized, that the method according to claim 1, the charging station of claim 12 and the system according to claim 15 are more flexible: In particular by the steps d) - f) an optimal capacity usage of the charging station with regard to an occupancy of each electric vehicle supply equipment as well as with regard to the maximum accumulative power consumption is enabled.

According to the invention it has further been first recognized that that the method according to claim 1, the charging station of claim 12 and the system according to claim 15 enable a minimized waiting and charging time for electric vehicles, an increased throughput of charging services and further enable an adaption to changing charging power conditions of the charging station.

According to the invention it has further been first recognized that the method according to claim 1, the charging station of claim 12 and the system according to claim 15 also provide an integration of sustainable energy solutions by taking into account fluctuating power of renewable energies, for example solar and wind power.

Further advantages, features and preferred embodiments of the present invention are described in the following sub claims.

According to a preferred embodiment the optimization parameter represents a minimized waiting time and/or a minimized charging time for charging at least one of the electric vehicles. If a driver of an electric vehicle on a trip has to recharge the batteries of his electric car, a minimized charging time and/or waiting time may be provided for his electric vehicle. The driver of the electric vehicle is thus enabled to drive on with his electric car in a minimized time. If only a minimized waiting time is provided the driver gets more relaxed since the time until his electric car may proceed to an assigned electric vehicle supply equipment for charging is minimized.

According to a further preferred embodiment the optimization parameter represents a minimized sum of the accumulated charging times for the electric vehicles and the accumulated waiting times for charging the electric vehicles at the charging station. This enables to set free an electric vehicle supply equipment of the charging station as fast as possible, so that other electric vehicles may then use the charging station for charging their batteries. Of course, it is also an option to sum up accumulated charging times and/or waiting times for only a fraction or part of all electric vehicles at or approaching the charging station.

According to a further preferred embodiment the optimization parameter represents a maximum power capacity utilisation of the charging station. This enables an optimized and efficient use of the available electrical power for the charging station for charging electric vehicles.

According to a further preferred embodiment power supply grid information about a power supply grid connected to the charging station is determined and that determination of the sequence according to step f) is further based on the determined power supply grid information. This enables for example an easy adaption also to renewable power generation, like solar energy or wind energy. Since renewable energies are weather dependent, information about a power supply grid providing power of renewable energies can be used for charging electric vehicles by the charging station: For example during daylight more electric cars may be charged within a reasonable time and in the absence of daylight the charging station may then to provide a reasonable charging time for only a limited number of electric vehicles.

According to a further preferred embodiment at least one of the steps a)-g) is performed repeatedly, preferably periodically and/or when the number of electric vehicles to be charged by the charging station has changed. This enables the charging station to be optimized not only at one moment but also in the future taking into account a varying number of electric cars. Another advantage is that the charging of electric vehicles, in particular their waiting time, their charging time, etc. is adapted quickly to actual scenarios or situations: If only few cars have to be charged by the charging station each car may be then assigned to a different electric vehicle supply equipment. If a greater number of electric vehicles than the number of electric vehicle supply equipment require charging, the different states of charge of vehicles may be taken into account. For example electric vehicles having the greater charging time are to be charged first, so that for each driver of electric vehicle a minimized accumulated sum of waiting time and charging time at the charging station is provided. For example, a charging of already present electric vehicles at the charging station may be adapted. Already present electric vehicles may be charged more quickly, so that future arriving electric vehicles may then also be charged more quickly with a reduced waiting time and/or charging time. Another advantage is that this further enables a refusal of electric vehicles for charging by the charging station prior to their arrival: An approaching electric car, which for example is arriving at the charging station in 15 minutes, may then be refused, if a waiting time and/or charging time for the electric vehicle exceeds a predetermined threshold. Such a threshold may for example either be required by a driver of an electric car and/or by the charging station itself. Refused electric vehicles may then be assigned to a different charging station with which a charging of the refused electric vehicle is then enabled within a more reasonable time. If the future charging profile is calculated regularly this further enhances the flexibility, since changing conditions, like number of electric vehicles to be charged, different charging profiles, waiting times, charging times, changing power grid supply energy, etc. can be taken into account.

According to a further preferred embodiment charging power provided by at least two electric vehicle supply equipment are proportionally adapted according to a maximum available power of the charging station and/or to the determined power supply grid information. Power requirements of the charging station are thus met. If for example the maximum available power is lower than the sum of the power requested by the electric vehicles at any given time, the charging power that will be allocated to each electric vehicle may then easily and fairly adapted respectively reduced.

According to a further preferred embodiment at least step e) includes stochastic, heuristic and/or metaheuristic methods, preferably simulated annealing. Stochastic, heuristic and/or metaheuristic methods provide an optimized selection of a future charging profile according to the optimization parameter and the determination of a sequence. Simulated annealing as a probabilistic metaheuristic for a global optimization problem of locating a good approximation to the global optimum of a given function enables finding an acceptably good solution in a pregiven amount of time. This reduces the calculation effort and reduces the memory usage in a corresponding means, in particular an integrated circuit, or the like.

According to a further preferred embodiment at least the waiting time and/or charging time for an electric vehicle is determined according to the selected future charging profile. Waiting time until beginning of charging and charging time of an electric vehicle are important parameters, relevant for a driver of an electric vehicle. Based on this information a driver may decide to proceed to another charging station if this charging station is also within reach. During charging a driver may also use this charging time for other tasks, for example for shopping or the like.

According to a further preferred embodiment steps a)-g) are performed prior to an arrival of an electric vehicle to be charged at the charging station. This enables a more easier calculation of a future charging profile for the charging station, since the information about the electric vehicle, for example the state of charge of the electric vehicle and its charging profile, may be transmitted to the charging station prior to the arrival and the charging station may then plan, queue or determine the sequence of electric vehicles according to an other future charging profile of the charging station, respectively perform a reordering of vehicles in the sequence to use the charging station more efficiently.

According to a further preferred embodiment at least the waiting time and/or the charging time for an electric vehicle to be charged at the charging station is transmitted to the electric vehicle prior to an arrival of the electric vehicle at the charging station. This enables a driver of the electric vehicle to decide, whether to use the charging station if in particular the sum of waiting time and charging time is acceptable for him or not. If not, the driver of the electric vehicle may try a different charging station within reach of his electric vehicle to obtain a quicker (re)charging of his electric vehicle. Of course, the travelling time to the charging station or to the different charging station may also be taken account for the decision, if information of alternative charging stations is provided to the driver. This information may be provided to the charging station by the driver of the electric car or vice versa or automatically by the electric vehicle itself.

According to a further preferred embodiment charging information of electric vehicles is transmitted to the charging station and/or the waiting time and/or charging time is transmitted to an electric vehicle via short-range communication and/or via mobile communication, preferably via a 3G- or a LTE-network.The advantage of a short-range communication is, that only a local infrastructure at the charging station is needed to communicate with electric vehicles. The advantage of a mobile communication is, that for example a user of the electric vehicle may prebook in advance different charging stations on his travel route so to optimize the driving range of his electric vehicle as well as to reduce waiting and charging times when charging at the charging stations on his travel route.

According to a further preferred embodiment electric power with a high power level and/or pricing differences according to an energy supply contract are provided by at least one of the electric vehicle supply equipment. This further increases the flexibility since different power levels or pricing models may by provided by the charging station via at least one of the electric vehicle supply equipment.

According to a further preferred embodiment reservation information of a charging spot at an electric vehicle supply equipment and/or of a charging time reserved prior to an arrival of an electric vehicle to be charged at the charging station is included in the calculation according to step d). This allows a minimized waiting time and/or charging time for a driver when arriving at the charging station. For example, if a plurality of electric power supply equipment is provided by the charging station a certain number of them may be reserved for prebooking, so that a fast and easy charging of electric vehicles with a prebooked charging spot is provided.

According to a further preferred embodiment of the charging station according to claim 15 communication means for providing data communication between an electric vehicle and the charging station is provided. This enables a more easier calculation of a future charging profile for the charging station, since the information about the electric vehicle, for example the state of charge of the electric vehicle, may be transmitted to the charging station in particular prior to the arrival and the charging station may then plan or queue the electric vehicle according to an optimized future charging profile of the charging station. This enables a driver of the electric vehicle to decide, whether to use the charging station if in particular the sum of waiting time and charging time is acceptable for him or not. If not, the driver of the electric vehicle may try a different charging station within reach of his electric vehicle to obtain a quicker (re)charging of his electric vehicle. Of course, the travelling time to the charging station or to the different charging station may also be taken account for the decision, if information of alternative charging stations is provided to the driver. This information may be provided to the charging station by the driver of the electric car or vice versa or automatically by the electric vehicle itself.

According to a further preferred embodiment the calculation means are operable to include reservation information of a charging spot at an electric vehicle supply equipment and/or of a charging time reserved prior to an arrival of an electric vehicle to be charged at the charging station. This enables a minimized waiting time and/or charging time for a driver when arriving at the charging station. For example, if a plurality of electric power supply equipment is provided by the charging station a certain number of them may be reserved or prebooked, so that a fast and easy charging of electric vehicles with a prebooked charging spot is provided.

There are several ways how to design and further develop the teaching of the present invention in an advantageous way. To this end, it is to be referred to the patent claims subordinate to patent claim 1 and patent claim 15 on the one hand and to the following explanation of preferred examples of embodiments of the invention, illustrated by the drawing on the other hand. In connection with the explanation of the preferred embodiments of the invention by the aid of the drawing, generally preferred embodiments and further developments of the teaching will be explained. In the drawing
- Fig. 1: is a schematic view of a charging station according to a first embodiment of the present invention;
- Fig 2a: is a flowchart view of a conventional first-in-first-out principle.
- Fig. 2b: is a flowchart of a method according to a second embodiment of the present invention;
- Fig. 3: is a state-of-charge dependent fast-charging profile of an electric car;
- Fig. 4: is a power-time-dependent fast-charging profile of an electric vehicle according to the state-of-charge dependent fast-charging profile according to Fig. 3;
- Fig. 5a: shows two power-time-dependent charging profiles according to a first and a second scenario for four electric cars and two electric vehicle supply equipment; and
- Fig. 5b: shows different power-time-dependent charging profiles according to a third and forth scenario for four different electric cars and two electric vehicles supply equipment.

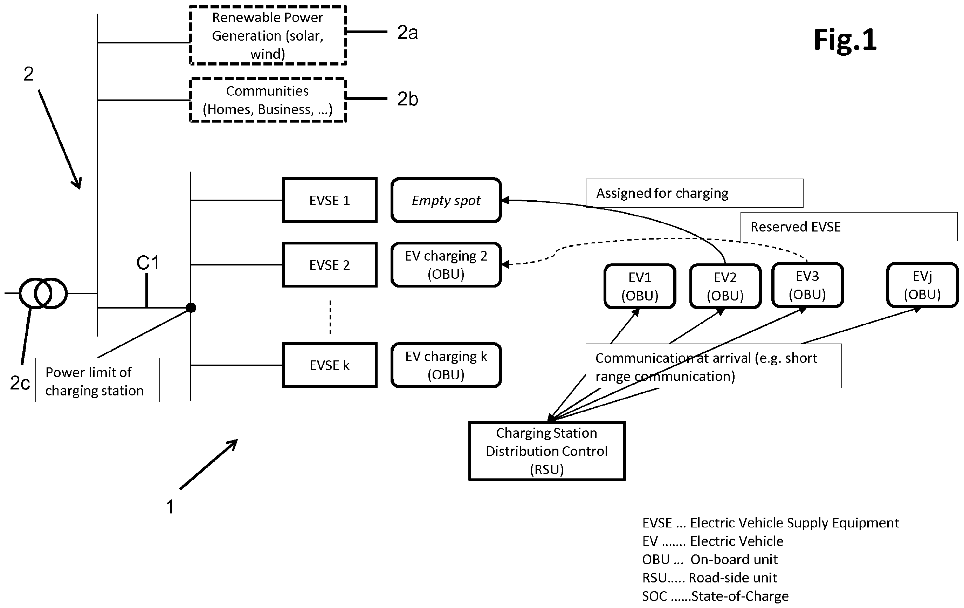

Fig. 1 is a schematic view of a charging station according to a first embodiment of the present invention.

Fig. 1 illustrates a system for charging electric vehicles EV1, EV2, ... EVj at a charging station 1. The charging station 1 is connected via a single connection C₁ to a power supply grid section 2. The power supply grid section 2 receives electric energy for example from a transformer 2c. The power supply grid section 2 further includes renewable power sources like solar panels or wind energy plants (reference sign 2a). Further, communities like homes, business, etc. (reference sign 2b) are also connected to the power supply grid section 2 using the provided electric energy.

The charging station 1 comprises a plurality of electric vehicle supply equipment EVSE1, EVSE2, ..., EVSEk, which are connected to the power supply grid section 2 via the single connection C₁. In Fig. 1 each of the electric vehicle supply equipment EVSE2, ... EVSEk is occupied with an electric vehicle for charging, denoted with reference signs EVcharging 2, ... EVchargingj. The charging station 1 comprises further a charging station distribution control, which communicates with onboard units OBU of electric vehicles EV1, EV2, ... EVj. The charging station distribution control includes a road-side unit RSU to contact the onboard units OBU of the different electric vehicles EV1, EV2, EVj at arrival of the corresponding electric vehicle EV1, EV2, EVj at the charging station 1, for example via short range communication. The road-side unit RSU then determines the state of charge of each of the electric vehicles EV1, EV2, ... EVj. If one of the electric supply equipment EVSE1, ..., EVSEk becomes available, for example if the corresponding electric vehicle has been fully charged, the charging station distribution control then assigns one of the electric vehicles EV1, EV2, ... EVj waiting to be charged to the available electric vehicle supply equipment EVSE1 for charging. The charging station distribution control calculates from the charging information of the charging station 1 and from charging information of each of the electric vehicles EV1, EV2, ... EVj waiting for charging, i.e. of the queued electric vehicles EV1, ... EVj and the electric vehicles EVcharging2, ... EVchargingj charged at the moment a series of future charging profiles, selects one of the calculated future charging profiles according to at least one optimization parameter, for example a minimized charging time for the arriving electric vehicles EV1, EV2, ... EVj, determines sequences of electric EV1, ... EVj to be charged by the different electric vehicle supply equipment EVSE1, ... EVSEk and assigns them to the different electric vehicle supply equipment EVSE1, EVSE2, ... EVSEk. This enables for example that a later arriving vehicle EV2 instead of EV1 is assigned to the first electric vehicle supply equipment EVSE1, when it is available to optimize for example use of the charging station 1. Future charging profiles are for example calculated by testing all sequences of the queued electric vehicles EV1, ... EVj for the different electric vehicle supply equipment EVSE1, ... EVSEk or the percentage of residual electric power to be used by each electric vehicle EV1, ... EVj. Of course it is possible to amend the charging profiles of the electric vehicles EV1, EV2, ... EVj according to the selected future charging profile if needed.

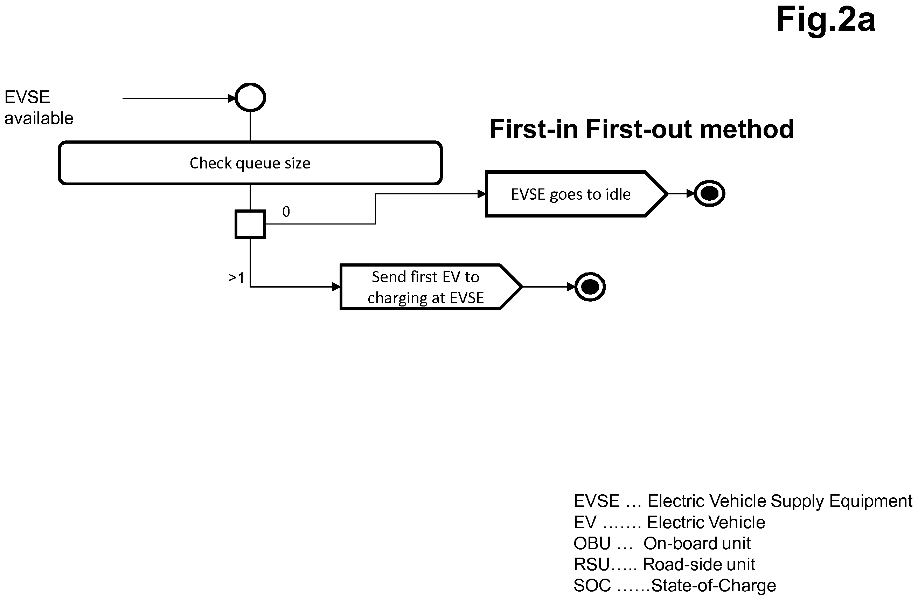

Fig 2a is a flowchart view of a conventional first-in-first-out principle.

In Fig 2a an assigning of electric vehicles to a electric vehicle supply equipment according to the conventional first-in-first-out principle is shown. If one of the electric vehicle supply equipment EVSE is available the size of the queue in terms of number of electric vehicles to be charged by the charging station is checked. If there are no electric vehicles in the queue, the available electric vehicle supply equipment EVSE is set to an idle mode. If the number of vehicles is equal to one the only electric vehicle in the queue is assigned to the available electric vehicle supply equipment EVSE. If the number of electric vehicles in the queue is greater than one, then the first vehicle in the queue is assigned to be charged by the electric vehicle supply equipment EVSE. After this elelctric vehicle has completed charging the electric vehicle supply equipment EVSE becomes available again and the size of the queue is checked again, etc.

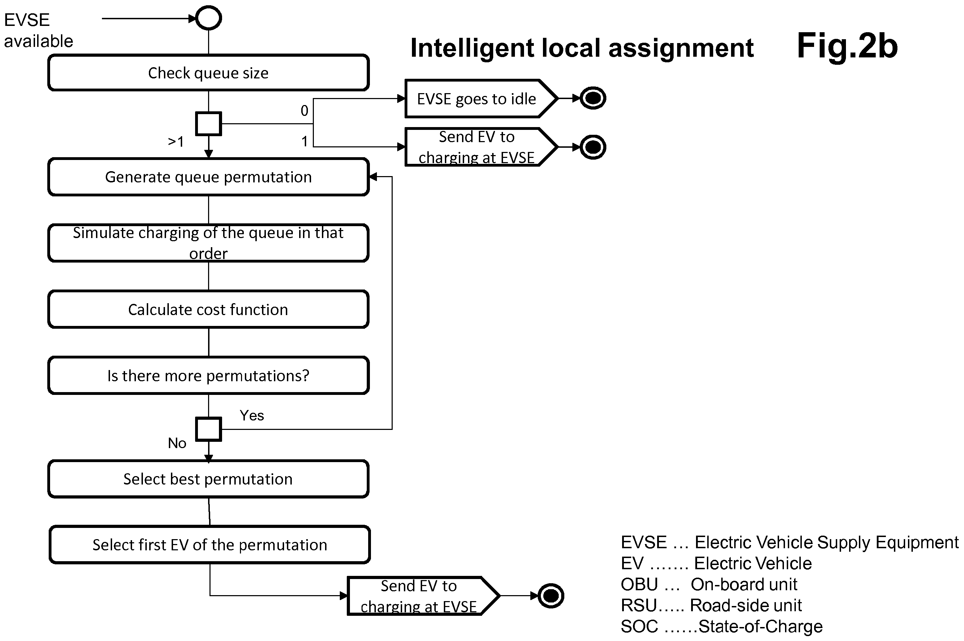

In Fig. 2b a flowchart of a method according to a second embodiment of the present invention is shown.

If an electric vehicle supply equipment EVSE is available the size of the queue in terms of number of electric vehicles to be charged by the charging station is checked. If there are no electric vehicles in the queue, the available electric vehicle supply equipment EVSE is set to an idle mode. If the number of vehicles is equal to one the only electric vehicle in the queue is assigned to the available electric vehicle supply equipment EVSE. If the number of electric vehicles in the queue is greater than one, then the electric vehicles in the queue are permutated and to every permutation of the queue a simulation of the charging of the electric vehicles by the electric vehicle supply equipment EVSE one after another is provided. Furthermore a cost function for determining the associated costs when charging the electric vehicles according to the different permutations is calculated. All permutations (permutation cycle) are then evaluated on the basis of an optimization parameter, for example minimzed waiting time and/or minimized charging time for charging the electric vehicles, and together with charging information. Charging information include the state-of-charge and/or the charging power profile of the electric vehicles in the queue and/or charging power information of the electric vehicle supply equipment EVSE of the charging station. The permutation corresponding to a highest value of the optimization parameter is selected and the first vehicle according to the selected permutation is assigned for charging to the available electric vehicle supply equipment EVSE.

If the number of elelctric vehicles changes, for example by additional arriving electric vehicles during the time at which electric vehicle supply equipment EVSE is occupied by the assigned electric vehicle, these electric vehicles are put into the queue and this updated queue is then permutated again and followed by the further steps as described above for determining a permutation on the basis of an optimization parameter. It is possible that the optimization parameter may be changed or adapted during consecutive permutation cycles.

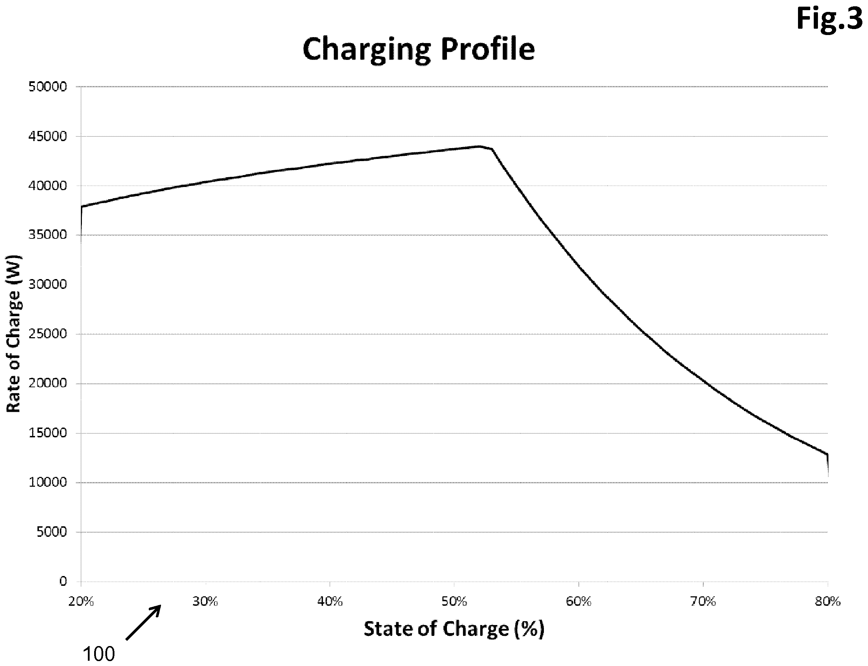

Fig. 3 is a state-of-charge dependent fast-charging profile of an electric car.

Fig. 3 shows a rate of charge in terms of Watt over the state-of-charge between 20% and 80%. This is here considered as the maximum power that can be accepted by the electric vehicle for charging, usually due to battery limitations. Charging is considered only up to 80% corresponding to a quick charging with high power which is usually limited to 80% state-of-charge. The rate of charge 100 starts at 20% and 38.000 Watt and increases further up to 45.000 Watt and 52% state-of-charge and decreases then non-linearly to 13.000 Watt and 80% state-of-charge.

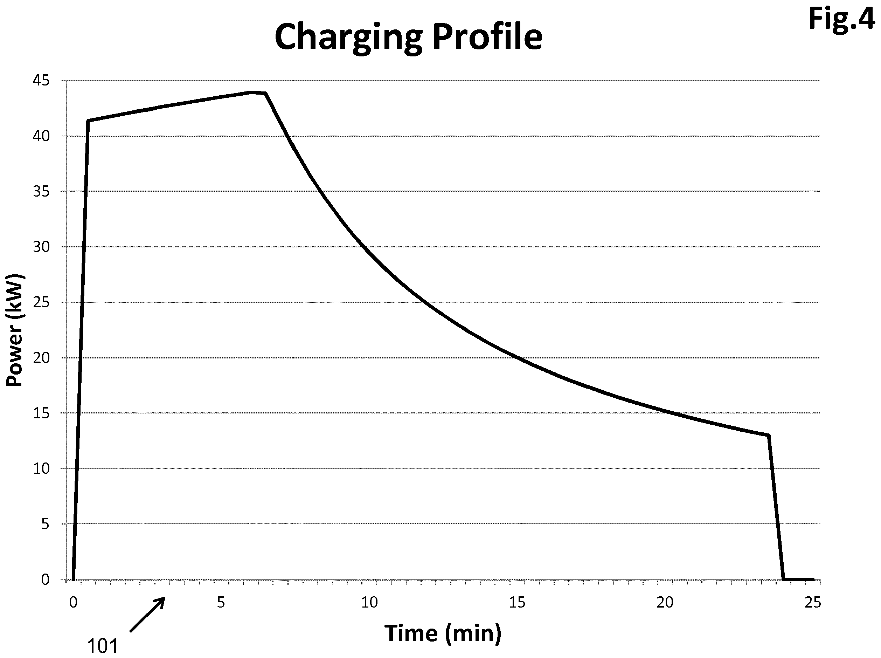

Fig. 4 is a power-time-dependent fast-charging profile of an electric vehicle according to the state-of-charge dependent fast-charging profile according to Fig. 3.

Fig. 4 depicts a charging profile with a "rate of charge" as a function of time for a electric vehicle starting with 35% state-of-charge. To charge the electric vehicle graph 101 starts at 42 kW, increases for 7 minutes to 44 kW, decreases then slightly to 43,8 kW for 1 minute and decreases then further for ca. 15 minutes to 13 kW. Then the power is reduced to 0 kW since the state-of-charge has reached 80%.

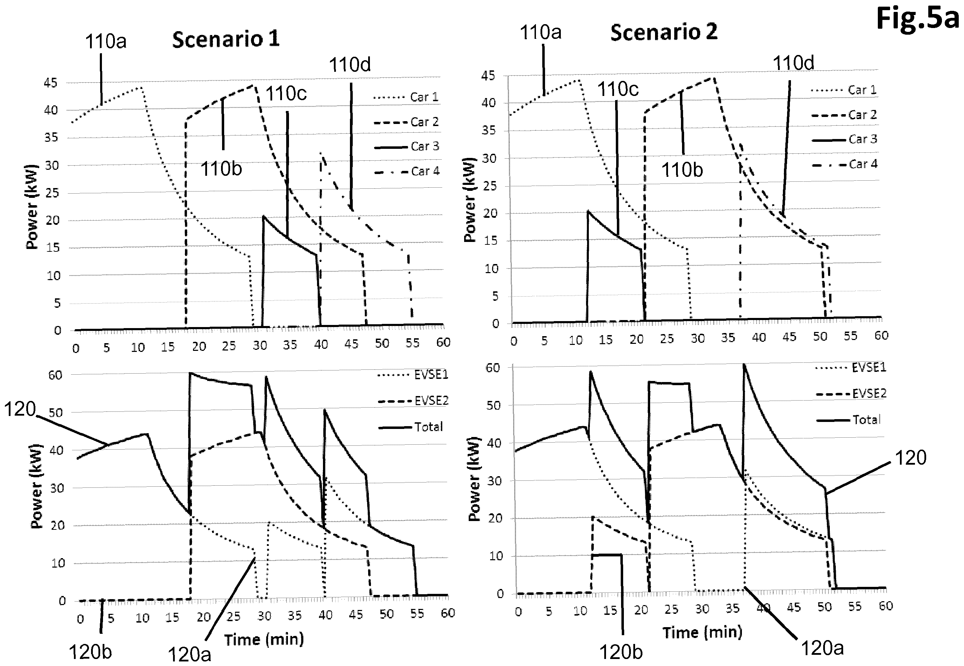

Fig. 5a shows two power-time-dependent charging profiles according to a first and a second scenario of different electric cars and different electric vehicle supply equipment.

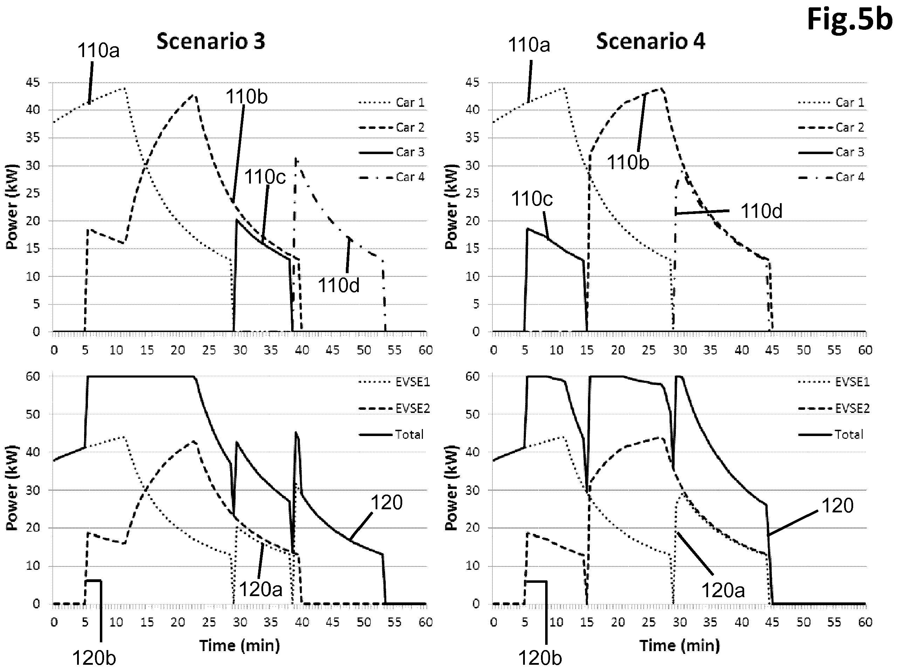

Basis for the Figures 5a and further Figure 5b is a charging station comprising of two electric vehicles supply equipment EVSE1, EVSE2 each providing a maximum power of 44 kW and the charging station having a maximum aggregated power of 60 kW. One of the electric vehicles supply equipment EVSE1 is supposed to be already occupied by an electric car Car1 having a state-of-charge of 20%. The second electric vehicle supply equipment EVSE2 is free. Two further cars Car2 and Car3 are supposed to be in the waiting queue at the initial time. Car2 has a state-of-charge of 70% and Car3 arrives with a state-of-charge of 20%. At a later time Car4 arrives with a state-of-charge of 60%.

The following scenarios (scenario 1 and 2 in Fig. 5a and scenario 3 and 4 in Fig. 5b) show how the charging profiles of the electric vehicle supply equipment EVSE1, EVSE2 of the charging station 1, the waiting time and charging time are effected by different scheduling approaches. Scenario 1 is based on a conventional first-in-first-out (FIFO) and a car is only charged when the full power profile is available at the charging station 1. This is shown in scenario 1, corresponding to Fig. 5a, left column. The first-in-first-out solution is to put the second car Car2 in the free electronic vehicle supply equipment EVSE2. The third car Car3 waits for the next available electric vehicle supply equipment EVSE1 to be available. The fourth car Car4 is filling into the next empty electronic vehicle supply equipment EVSE2 at later time, resulting in a very disruptive total charging profile 120 representing total power usage of the charging station 1, reflecting the stochastic arrival situation.

In detail Fig. 5a left column upper diagram shows the different charging profiles 110a, 110b, 110c and 110d of the electric vehicles Car1 - Car4 according to the charging profile of Fig. 3. Therefore the graphs 110a, 110b, 110c and 110d show different sections of the charging profile of Fig. 4. The beginning of each graph 110a, 110b, 110c, 110d corresponds to the beginning of the charging of each of the cars Car1 - Car4 respectively on an electric vehicle supply equipment EVSE1, EVSE2. When the first car Car1 is fully charged to 80% state-of-charge, the third car Car3 uses electric vehicle supply equipment EVSE1 for charging. However, since electric vehicles are only to be charged when full power is available, Car3 has to wait two minutes before starting charged. After fully charging (graph 110c) the third car Car3 to a state-of-charge of 80%, the fourth car Car4 uses the electric vehicle supply equipment EVSE1 for charging. In the left lower corner the diagram shows the corresponding charging profiles of the electronic vehicle supply equipments EVSE1 and EVSE2 (reference signs 120a and 120b) as well as the sum of both graphs 120a, 120b resulting in graph 120. Graph 120 represents the total power usage of charging station 1. Graph 120 is very disruptive reflecting the stochastic arrival situation.

In scenario 2, Car3 is assigned to be charged first at the available electric vehicle supply equipment. All cars Car1-Car4 are again only charged at their full profile 110a, 110b, 110c, 110d. The first car Car1 is charged according to graph 110a with the first electric vehicle supply equipment EVSE1. In the second electric vehicle supply equipment EVSE2 the third car Car3 is charged according to graph 110c. After the third car Car3 is fully charged, the second car Car2 is charged with graph 110b. Since each car Car1 - Car4 gets the full charging profile, the fourth car Car4 has to wait until graph 110b of the second car Car2 has been decreased to such an extend, that the sum of graph 110b and 110d does not extent the overall charging station a power limit of 60 kW.

This method enables an assignment of the four cars in a different order. The placement into the corresponding electric vehicle supply equipment EVSE1 and EVSE2 is made such, that each car Car1-Car4 gets the full charging profile while ensuring the shortest global charging time irrespective of the waiting time. The total charging is shortened from 55 minutes in the conventional scenario 1 to about 52 minutes in scenario 2. In the lower right corner, the charging profile 120 of the charging station 1 is still spiked, however already here the overall situation has improved: The third car Car3 has a largely decreased waiting time for charging, the charging of the fourth car Car4 starts earlier.

Fig. 5b shows different power-time-dependent scenarios of four different electric cars and two electric vehicles supply equipment.

In Fig. 5b is already described a third and fourth scenario according to Fig. 5a. In Fig. 5b left column, scenario 3 Car1 is already assigned and to electric vehicle supply equipment EVSE1 the cars Car2 - Car4 are assigned according to the first-in-first-out principle but with exploiting the residual power up to the maximum power limit of the charging station of 60 kW, or up to their maximum charging profile Fig. 1. While this slightly lengthens the charging time for the second car Car2, the aggregated profile according to graph 120 is optimized for power usage efficiency, in particular between 5 minutes and 23 minutes. However, as the charging of Car2 starts earlier, it finishes at a sooner time than in conventional scenario 1.

In Fig. 5b, right column, scenario 4 the assignment of Car2 - Car4 is now optimized regarding the usage of the residual power of the charging station by enabling a charging profile-based sorting of queued cars: The second and third car Car2, Car3 are swapped in the queue. As a result the aggregated profile 120 of the charging station 1 is much more smoothed out and the overall charging time of Car1 - Car4 decreases now down to 45 min. The efficiency for the electric vehicle supply equipment EVSE1, EVSE2 usage, the efficiency of the charging station power capacity smoothed out up to 60 kW maximum as well as the car throughput of the charging station has been increased.

In scenario 4 the first car Car1 is charged with graph 110a and the residual power is used for charging the third car Car3 at the second electrical vehicle supply equipment EVSE2. After fully charging the third car Car3, the second car Car2 is fully charged according to graph 110b at the second electric vehicle supply equipment EVSE2. After charging the first car Car1 according to graph 110a at the electric vehicle supply equipment EVSE1 the fourth car Car4 is charged according to graph 110d.

Optionally equally sharing the power between all electric vehicle supply equipment on a charging station may be applied. Further contractual situation may be taken into account when charging electric vehicles: For example as reducing a power level is lengthening the charging time, this might for example affect a charging price, which may be time-based, volume/time based, etc.

In summary, the present invention provides on-site load management for quick charging infrastructure embedded with power grid control capabilities. Further on-site assignment of arriving electric vehicles for charging to electric vehicle supply equipment is performed according to their electric vehicle charging profile in correlation to the ongoing charging effort on all serving stations and other arriving electric vehicles. The present invention further provides queuing of electric vehicles. Control of the charging power profiles with respect to power grid conditions for the charging station and for individual serving stations in form of electric vehicle supply equipment with respect to electric vehicle placement is also provided. Forecasting a distribution of the power consumption of the charging station with flexibility to the adaption to the power grid in assignment routine is even further provided.

The present invention further provides on-site and real-time load management for quick charging infrastructure embedded with power grid control capabilities. Further, the present invention provides on-site arrival time assignment of electric vehicles to serving stations in form of electric vehicle supply equipment according to their expected charging profile conditioned by the power grid situation and/or accumulated charging profile of the entire charging station. The present invention even further provides real-time monitoring of charging stations and its electronic vehicle supply equipment with real-time adaption of the charging profile towards the power grid through the on-site electric vehicle placement. The present invention provides real-time monitoring and forecast of charging station's charging profile towards power grid control and provides optionally integrated pre-booking from off-site electric vehicle charging planning.

The present invention provides in particular a solution for the challenges/thread on the power grid for stochastic high loads by integration of solution into the dynamics of power grid control through forecast and conditioning, contributes to the societal goal for sustainable energy solutions by enabling integration with fluctuating renewable energies, an impact on charging security, a reduction of user churn by respecting car charging profiles and reduction of waiting time, an optimized capacity utilization with different parameter goals like low waiting time, high throughput and power limit and further an applicability for NC charging load management.

The present invention has inter alia the following advantages:
- On-site description of the electric vehicle charging characteristics,
- Maximal capacity utilization of each electric vehicle supply equipment optimized over time,
- Respecting power grid conditions,
- Increased throughput of charging services in particular optimal queuing,
- Minimized waiting and charging time for electric vehicles in particular resulting in instant charging depending with the desire of continuation of a driver's travel, wherein instant charging means that the purpose of the stop of the users travel is to get the electric vehicle charged within a given small time period and continue the journey.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for charging electric vehicles (EV1, EV2, ... EVj) by a charging station (1) having a plurality of electric vehicle supply equipment (EVSE1, EVSE2, ... EVSEk) for charging, **characterized by** the steps of
a) Determining charging information of the electric vehicles (EV1, EV2, ... EVj),
b) Determining charging power information of the charging station (1),
c) Determining charging power information of each electric vehicle supply equipment (EVSE1, EVSE2, ... EVSEk),
d) Calculating a plurality of future charging profiles (120) for the charging station (1) based on the determined charging power information of step b) and step c) and the determined charging information of step a),
e) Selecting one calculated future charging profile (120) according to at least one optimization parameter,
f) Determining a sequence of electric vehicles (EV1, EV2, ... EVj) for at least one electric vehicle supply equipment (EVSE1, EVSE2, ... EVSEk), wherein the sequence based on the selected future charging profile (120),
g) Assigning the electric vehicles (EV1, EV2, ... EVj) according to the corresponding determined sequence to the corresponding electric vehicle supply equipment (EVSE1, EVSE2, ... EVSEk) and
h) Charging the electric vehicles (EV1, EV2, ... EVj) by the assigned electric vehicle supply equipment (EVSE1, EVSE2, ... EVSEk) according to the determined charging information of the electric vehicles (EV1, EV2, ... EVj) and the determined charging power information of the assigned electric vehicle supply equipment (EVSE1, EVSE2, ... EVSEk).

2. The method according to claim 1, **characterized in that** the optimization parameter represents a minimized waiting time and/or a minimized charging time for charging at least one of the electric vehicles (EV1, EV2, ... EVj).

3. The method according to one of the claims 1-2, **characterized in that** the optimization parameter represents a minimized sum of the accumulated charging times for the electric vehicles (EV1, EV2, ... EVj) and the accumulated waiting times for charging the electric vehicles (EV1, EV2, ... EVj) at the charging station (1) and/or that the optimization parameter represents a maximum power capacity utilisation of the charging station (1).

4. The method according to claim 3, **characterized in that** power supply grid information about a power supply grid (2) connected to the charging station (1) is determined and that determination of the sequence according to step f) is further based on the determined power supply grid information.

5. The method according to one of the claims 1-4, **characterized in that** at least one of the steps a)-g) is performed repeatedly, preferably periodically and/or when the number of electric vehicles to be charged by the charging station has changed.

6. The method according to one of the claims 1-5, **characterized in that** charging power provided by at least one electric vehicle supply equipment (EVSE1, EVSE2, ... EVSEk) are proportionally adapted according to a maximum available power of the charging station (1) and/or to the determined power supply grid information.

7. The method according to one of the claims 1-6, **characterized in that** at least a waiting time and/or charging time for an electric vehicle (EV1, EV2, ... EVj) is determined according to the selected future charging profile (120), preferably wherein the waiting time and/or the charging time for an electric vehicle to be charged at the charging station is transmitted to the electric vehicle (EV1, EV2, ... EVj) prior to an arrival of the electric vehicle (EV1, EV2, ... EVj) at the charging station (1).

8. The method according to one of the claims 1-7, **characterized in that** steps a)-g) are performed prior to an arrival of an electric vehicle (EV1, EV2, ... EVj) to be charged at the charging station (1).

9. The method according to claim 8, **characterized in that** charging information of electric vehicles is transmitted to the charging station and/or the waiting time and/or charging time is transmitted to an electric vehicle via short-range communication and/or via mobile communication, preferably via a 3G- or a LTE-network.

10. The method according to one of the claims 1-9, **characterized in that** electric power with a high power level and/or pricing differences according to an energy supply contract are provided by at least one of the electric vehicle supply equipment (EVSE1, ..., EVSEk).

11. The method according to one of the claims 1-10, **characterized in that** reservation information of a charging spot at an electric vehicle supply equipment (EVSE1, ... EVSEk) and/or of a charging time reserved prior to an arrival of an electric vehicle (EV1, EV2, ... EVj) to be charged at the charging station (1) is included in the calculation according to step d).

12. A charging station (1) for charging electric vehicles (EV1, EV2, ... EVj) preferably for performing with the method according to one of the claims 1-11, **characterized by**
a) a plurality of electric vehicle supply equipment (EVSE1, ... EVSEk) for charging electric vehicles (EV1, ... EVj),
b) determining means for determining charging information of the electric vehicles (EV1, EV2, ... EVj), for determining charging power information of the charging station (1), and for determining charging power information of each electric vehicle supply equipment (EVSE1, EVSE2, ... EVSEk),
c) calculation means for calculating a plurality of charging profiles (120) for the charging station (1) based on the determined charging power information and the determined charging information,
d) selection means for selecting one calculated future charging profile (120) according to at least one optimization parameter,
e) sequence means for determining a sequence of electric vehicles (EV1, EV2, ... EVj) for at least one electric vehicle supply equipment (EVSE1, EVSE2, ... EVSEk), wherein the sequence based on the selected future charging profile (120),
f) assigning means (RSU) for assigning the electric vehicles (EV1, EV2, ... EVj) according to the corresponding determined sequence to the corresponding electric vehicle supply equipment (EVSE1, EVSE2, ... EVSEk),
wherein the assigned electric vehicle supply equipment (EVSE1, ... EVSEk) are operable to charge the electric vehicles (EV1, EV2, ... EVj) according to the determined charging information of the electric vehicles (EV1, EV2, ... EVj) and the determined charging power information of the assigned electric vehicle supply equipment (EVSE1, EVSE2, ... EVSEk)

13. The charging station according to claim 12, **characterized by** communication means (RSV) for providing data communication between an electric vehicle (EV1, ... EVk) and the charging station (1).

14. The charging station according to one of the claims 12-13, **characterized in that** the calculation means (RSU) are operable to include reservation information of a charging spot at an electric vehicle supply equipment (EVSE1, ... EVSEk) and/or of a charging time reserved prior to an arrival of an electric vehicle (EV1, EV2, ... EVj) to be charged at the charging station (1).

15. A system for charging electric vehicles, preferably for performing with the method according to one of the claims 1-11, comprising a charging station (1) according to one of the claims 12-14 and a power supply grid (2), connected via a single connection (C1) to the charging station (1), preferably wherein the power supply grid (2) supplies at least partially power of renewable energies to the charging station.

## Patentansprüche

1. Ein Verfahren zum Laden elektrischer Fahrzeuge (EV1, EV2,... EVj) durch eine Ladestation (1) mit einer Mehrzahl von Elektrisches-Fahrzeug-Belieferungsausrüstungen (EVSE1, EVSE2,...EVj) zum Laden, **gekennzeichnet durch** die Schritte
a) Ermitteln von Ladeinformationen der elektrischen Fahrzeuge (EV1, EV2,...EVj),
b) Ermitteln von Ladeleistungsinformationen von der Ladestation (1),
c) Ermitteln von Ladeleistungsinformationen von jeder Elektrisches-Fahrzeug-Belieferungsausrüstung (EVSE1, EVSE2,...EVSEk),
d) Berechnen einer Mehrzahl von Zukunftsladeprofilen (120) für die Ladestation (1) basierend auf den ermittelten Ladeleistungsinformationen von Schritt b) und Schritt c) und den ermittelten Ladeinformationen von Schritt a),
e) Auswählen eines berechneten Zukunftsladeprofils (120) gemäß zumindest einem Optimierungsparameter,
f) Ermitteln einer Abfolge von elektrischen Fahrzeugen (EV1, EV2,...EVj) für zumindest eine Elektrisches-Fahrzeug-Belieferungsausrüstung (EVSE1, EVSE2,... EVSEk), wobei die Abfolge auf dem ausgewählten Zukunftsladeprofil (120) basiert,
g) Zuweisen der elektrischen Fahrzeuge (EV1, EV2,... EVj) gemäß der entsprechenden ermittelten Abfolge zu der entsprechenden Elektrisches-Fahrzeug-Belieferungsausrüstung (EVSE1, EVSE2,...EVSEk) und
h) Laden der elektrischen Fahrzeuge (EV1, EV2,... EVj) durch die zugewiesene Elektrisches-Fahrzeug-Belieferungsausrüstung (EVSE1, EVSE2,... EVSEk) gemäß der ermittelten Ladeinformationen der elektrischen Fahrzeuge (EV1, EV2,... EVj) und der ermittelten Ladeleistungsinformationen der zugewiesenen Elektrisches-Fahrzeug-Belieferungsausrüstung (EVSE1, EVSE2,...EVSEk).

2. Das Verfahren gemäß Anspruch 1, **dadurch gekennzeichnet, dass** der Optimierungsparameter eine minimierte Wartezeit und/oder eine minimierte Ladezeit zum Laden zumindest eines elektrisches Fahrzeugs (EV1, EV2,...EVj) repräsentiert.

3. Das Verfahren gemäß einem der Ansprüche 1-2, **dadurch gekennzeichnet, dass** der Optimierungsparameter eine minimierte Summe der kumulierten Ladezeiten der elektrischen Fahrzeuge (EV1, EV2,...EVj) und der kumulierten Wartezeiten zum Laden der elektrischen Fahrzeuge (EV1, EV2,... EVj) an der Ladestation (1) repräsentiert und/oder dass der Optimierungsparameter eine maximale Leistungsfähigkeitsnutzung der Ladestation (1) repräsentiert.

4. Das Verfahren gemäß Anspruch 3, **dadurch gekennzeichnet, dass** Versorgungsnetzinformationen über ein Versorgungsnetz (2), das mit der Ladestation (1) verbunden ist, ermittelt werden und dass eine Ermittlung der Abfolge gemäß Schritt f) zusätzlich auf den ermittelten Versorgungsnetzinformationen basiert.

5. Das Verfahren gemäß einem der Ansprüche 1-4, **dadurch gekennzeichnet, dass** zumindest einer der Schritte a)-g) wiederholt durchgeführt wird, vorzugsweise periodisch und/oder wenn die Anzahl der elektrischen Fahrzeuge, die durch die Ladestation geladen werden sollen, sich ändert.

6. Das Verfahren gemäß einem der Ansprüche 1-5, **dadurch gekennzeichnet, dass** eine Ladeleistung, die durch zumindest eine Elektrisches-Fahrzeug-Belieferungsausrüstung (EVSE1, EVSE2,...EVSEk) bereitgestellt wird, proportional gemäß einer maximal verfügbaren Leistung der Ladestation (1) und/oder gemäß der ermittelten Versorgungsnetzinformationen angepasst wird.

7. Das Verfahren gemäß einem der Ansprüche 1-6, **dadurch gekennzeichnet, dass** zumindest eine Wartezeit und/oder Ladezeit für ein elektrisches Fahrzeug (EV1, EV2,... EVj) ermittelt wird gemäß dem ausgewählten Zukunftsladeprofil (120), vorzugsweise wobei die Wartezeit und/oder die Ladezeit für ein elektrisches Fahrzeug (EV1, EV2,... EVj) vor einer Ankunft des elektrischen Fahrzeugs (EV1, EV2,...EVj) an der Ladestation (1) an das elektrische Fahrzeug (EV1, EV2,...EVj) übertragen wird.

8. Das Verfahren gemäß einem der Ansprüche 1-7, **dadurch gekennzeichnet, dass** die Schritte a)-g) vor einer Ankunft eines elektrischen Fahrzeugs (EV1, EV2,...EVj), welches an der Ladestation (1) aufgeladen werden soll, durchgeführt werden.

9. Das Verfahren gemäß Anspruch 8, **dadurch gekennzeichnet, dass** Ladeinformationen von elektrischen Fahrzeugen an die Ladestation übertragen werden und/oder Wartezeit und/oder Ladezeit an das elektrische Fahrzeug übertragen werden mittels Kurzreichweitenkommunikation und/oder mittels Mobilfunk, vorzugsweise über 3G- oder ein LTE-Netzwerk.

10. Das Verfahren gemäß einem der Ansprüche 1-9, **dadurch gekennzeichnet, dass** elektrische Energie mit einem hohen Energielevel und/oder Bepreisungsunterschiede gemäß einem Energieversorgungsvertrag bereitgestellt werden durch zumindest eine der Elektrisches-Fahrzeug-Belieferungsausrüstungen (EVSE1,...EVSEk).

11. Das Verfahren gemäß einem der Ansprüche 1-10, **dadurch gekennzeichnet, dass** Reservierungsinformationen eines Ladepunkts einer Elektrisches-Fahrzeug-Belieferungsausrüstung (EVSE1,...EVSEk) und/oder eine Ladezeit, die vor einer Ankunft eines an der Ladestation (1) zu ladenden elektrischen Fahrzeugs (EV1, EV2,...EVj) reserviert wurde, bei der Berechnung gemäß Schritt d) einbezogen wird.

12. Eine Ladestation (1) zum Laden elektrischer Fahrzeuge (EV1, EV2,...EVj), vorzugsweise zur Durchführung des Verfahrens gemäß einem der Ansprüche 1-11, **gekennzeichnet durch**
a) eine Mehrzahl von Elektrisches-Fahrzeug-Belieferungsausrüstungen (EVSE1,... EVSEk) zum Laden elektrischer Fahrzeuge (EV1,...EVj),
b) Ermittlungsmittel zum Ermitteln von Ladeinformationen der elektrischen Fahrzeuge (EV1, EV2,...EVj), zum Ermitteln von Ladeleistungsinformationen der Ladestation (1), und zum Ermitteln von Ladeleistungsinformationen von jeder Elektrisches-Fahrzeug-Belieferungsausrüstung (EVSE1, EVSE2,...EVSEk),
c) Berechnungsmittel zum Berechnen einer Mehrzahl von Zukunftsladeprofilen (120) für die Ladestation (1) basierend auf den ermittelten Ladeleistungsinformationen von Schritt b) und Schritt c) und den ermittelten Ladeinformationen von Schritt a),
d) Auswahlmittel zum Auswählen eines berechneten Zukunftsladeprofils (120) gemäß zumindest einem Optimierungsparameter,
e) Abfolgemittel zum Ermitteln einer Abfolge von elektrischen Fahrzeugen (EV1, EV2,...EVj) für zumindest eine Elektrisches-Fahrzeug-Belieferungsausrüstung (EVSE1, EVSE2,...EVj), wobei die Abfolge auf dem ausgewählten Zukunftsladeprofil (120) basiert,
f) Zuweisungsmittel (RSU) zum Zuweisen der elektrischen Fahrzeuge (EV1, EV2,... EVj) gemäß der entsprechenden ermittelten Abfolge zu der entsprechenden Elektrisches-Fahrzeug-Belieferungsausrüstung (EVSE1, EVSE2,...EVSEk),
wobei die zugewiesenen Elektrisches-Fahrzeug-Belieferungsausrüstungen (EVSE1,... EVSEk) ausgebildet sind, die elektrischen Fahrzeuge (EV1, EV2,...EVj) gemäß den ermittelten Ladeinformationen der elektrischen Fahrzeuge (EV1, EV2,...EVj) und den ermittelten Ladeleistungsinformationen der zugewiesenen Elektrisches-Fahrzeug-Belieferungsausrüstung (EVSE1, EVSE2,...EVSEk) zu laden.

13. Die Ladestation gemäß Anspruch 12, **gekennzeichnet durch** Kommunikationsmittel (RSV) zum Bereitstellen einer Datenverbindung zwischen einem elektrischen Fahrzeug (EV1, EVk) und der Ladestation (1).

14. Die Ladestation gemäß einem der Ansprüche 12-13, **dadurch gekennzeichnet, dass** die Berechnungsmittel (RSU) ausgebildet sind, Reservierungsinformationen eines Ladepunkts einer Elektrisches-Fahrzeug-Belieferungsausrüstung (EVSE1, ... EVSEk) und/oder eine Ladezeit, die vor einer Ankunft eines an der Ladestation (1) zu ladenden elektrischen Fahrzeugs (EV1, EV2,...EVj) reserviert wurde, einzubeziehen.

15. Ein System zum Laden elektrischer Fahrzeuge, vorzugsweise zur Durchführung eines Verfahrens gemäß einem der Ansprüche 1-11, umfassend eine Ladestation (1) gemäß einem der Ansprüche 12-14 und ein Versorgungsnetz (2), welches über eine einzelne Verbindung (C1) mit der Ladestation (1) verbunden ist, vorzugsweise wobei das Versorgungsnetz (2) zumindest teilweise Energie erneuerbarer Energiequellen der Ladestation bereitstellt.

## Revendications

1. Procédé de charge de véhicules électriques (EV1, EV2, ... EVj) par un poste de charge (1) présentant une pluralité d'équipement d'alimentation de véhicule électrique (EVSE1, EVSE2, ... EVSEk) pour la charge, **caractérisé par** les étapes de.
a) détermination d'une information de charge des véhicules électriques (EV1, EV2, ... EVj),
b) détermination d'une information de puissance de charge du poste de charge (1),
c) détermination d'une information de puissance de charge de chaque équipement d'alimentation de véhicule électrique (EVSE1, EVSE2, ... EVSEk),
d) calcul d'une pluralité de profils de charge futurs (120) pour le poste de charge (1) sur la base de l'information de puissance de charge déterminée de l'étape b) et l'étape c) et de l'information de charge déterminée de l'étape a),
e) sélection d'un profil de charge futur calculé (120) selon au moins un paramètre d'optimisation,
f) détermination d'une séquence de véhicules électriques (EV1, EV2, ... EVj) pour au moins un équipement d'alimentation de véhicule électrique (EVSE1, EVSE2, ... EVSEk), dans lequel la séquence est basée sur le profil de charge futur sélectionné (120),
g) attribution des véhicules électriques (EV1, EV2, ... EVj) selon la séquence déterminée correspondante à l'équipement d'alimentation de véhicule électrique correspondant (EVSE1, EVSE2, ... EVSEk) et
h) charge des véhicules électriques (EV1, EV2, ... EVj) par l'équipement d'alimentation de véhicule électrique attribué (EVSE1, EVSE2, ... EVSEk) selon l'information de charge déterminée des véhicules électriques (EV1, EV2, ... EVj) et l'information de puissance de charge déterminée de l'équipement d'alimentation de véhicule électrique attribué (EVSE1, EV-SE2, ...EVSEk).

2. Procédé selon la revendication 1, **caractérisé en ce que** le paramètre d'optimisation représente un temps d'attente minimisé et/ou un temps de charge minimisé pour la charge d'au moins un des véhicules électriques (EV1, EV2, ... EVj).

3. Procédé selon l'une quelconque des revendications 1 à 2, **caractérisé en ce que** le paramètre d'optimisation représente une somme minimisée des temps de charge accumulés pour les véhicules électriques (EV1, EV2, ... EVj) et les temps d'attente accumulés pour la charge des véhicules électriques (EV1, EV2, ... EVj) au niveau du poste de charge (1) et/ou que le paramètre d'optimisation représente une utilisation de capacité de puissance maximum du poste de charge (1).

4. Procédé selon la revendication 3, **caractérisé en ce que** l'information de réseau d'alimentation électrique concernant un réseau d'alimentation électrique (2) raccordé au poste de charge (1) est déterminée et que la détermination de la séquence selon l'étape f) est en outre basée sur l'information de réseau d'alimentation électrique déterminée.

5. Procédé selon l'une quelconque des revendications 1 à 4, **caractérisé en ce qu'**au moins une des étapes a) à g) est réalisée de manière répétée, de préférence périodiquement et/ou lorsque le nombre de véhicules électriques à charger par le poste de charge a changé.

6. Procédé selon l'une quelconque des revendications 1 à 5, **caractérisé en ce que** la puissance de charge fournie par au moins un équipement d'alimentation de véhicule électrique (EVSE1, EVSE2, ..., EVSEk) est adaptée proportionnellement selon une puissance disponible maximum du poste de charge (1) et/ou l'information de réseau d'alimentation de puissance déterminée.

7. Procédé selon l'une quelconque des revendications 1 à 6, **caractérisé en ce qu'**au moins un temps d'attente et/ou temps de charge pour un véhicule électrique (EV1, EV2, ... EVj) est déterminé selon le profil de charge futur sélectionné (120), de préférence dans lequel le temps d'attente et/ou le temps de charge pour un véhicule électrique à charger au niveau du poste de charge est transmis au véhicule électrique (EV1, EV2, ... EVj) avant une arrivée du véhicule électrique (EV1, EV2, ... EVj) au niveau du poste de charge (1).

8. Procédé selon l'une quelconque des revendications 1 à 7, **caractérisé en ce que** les étapes a) à g) sont réalisées avant une arrivée d'un véhicule électrique (EV1, EV2, ... EVj) à charger au niveau du poste de charge (1).

9. Procédé selon la revendication 8, **caractérisé en ce que** l'information de charge de véhicules électriques est transmise au poste de charge et/ou le temps d'attente et/ou le temps de charge est transmis à un véhicule électrique via la communication à faible portée et/ou via la communication mobile, de préférence via un réseau 3G ou LTE.

10. Procédé selon l'une quelconque des revendications 1 à 9, **caractérisé en ce que** la puissance électrique avec un niveau haute puissance et/ou des différences de tarification selon un contrat d'alimentation en énergie sont fournies par au moins un de l'équipement d'alimentation de véhicule électrique (EVSE1, ..., EVSEk).

11. Procédé selon l'une quelconque des revendications 1 à 10, **caractérisé en ce que** l'information de réservation d'un point de charge sur un équipement d'alimentation de véhicule électrique (EVSE1, ..., EVSEk) et/ou d'un temps de charge réservé avant une arrivée d'un véhicule électrique (EV1, EV2, ... EVj) à charger au niveau du poste de charge (1) est incluse dans le calcul selon l'étape d).

12. Poste de charge (1) pour la charge de véhicules électriques (EV1, EV2, ... EVj) de préférence pour la réalisation avec le procédé selon l'une quelconque des revendications 1 à 11, **caractérisé par**
a) une pluralité d'équipement d'alimentation de véhicule électrique (EVSE1, ... EVSEk) pour la charge de véhicules électriques (EV1, ... EVj),
b) des moyens de détermination pour déterminer une information de charge de véhicules électriques (EV1, EV2, ... EVj) pour déterminer une information de puissance de charge du poste de charge (1), et pour déterminer une information de puissance de charge de chaque équipement d'alimentation de véhicule électrique (EVSE1, EVSE2, ... EVSEk),
c) des moyens de calcul pour calculer une pluralité de profils de charge (120) pour le poste de charge (1) sur la base de l'information de puissance de charge déterminée et de l'information de charge déterminée,
d) des moyens de sélection pour sélectionner un profil de charge futur calculé (120) selon au moins un paramètre d'optimisation,
e) des moyens de séquence pour déterminer une séquence de véhicules électriques (EV1, EV2, ... EVj) pour au moins un équipement d'alimentation de véhicule électrique (EVSE1, EVSE2, ... EVSEk), dans lequel la séquence est basée sur le profil de charge futur sélectionné (120),
f) des moyens d'attribution (RSU) pour attribuer les véhicules électriques (EV1, EV2, ... EVj) selon la séquence déterminée correspondante à l'équipement d'alimentation de véhicule électrique correspondante (EV-SE1, EVSE2, ... EVSEk),
dans lequel l'équipement d'alimentation de véhicule électrique attribué (EVSE1, ... EVSEk) est actionnable pour charger les véhicules électriques (EV1, EV2, ... EVj) selon l'information de charge déterminée des véhicules électriques (EV1, EV2, ... EVj) et l'information de puissance de charge déterminée de l'équipement d'alimentation de véhicule électrique attribué (EVSE1, EVSE2, ... EVSEk).

13. Poste de charge selon la revendication 12, **caractérisé par** des moyens de communication (RSV) pour la fourniture de communication de données entre un véhicule électrique (EV1, ... EVk) et le poste de charge (1).

14. Poste de charge selon l'une quelconque des revendications 12 à 13, **caractérisé en ce que** les moyens de calcul (RSU) sont actionnables pour inclure l'information de réservation d'un point de charge au niveau d'un équipement d'alimentation de véhicule électrique (EVSE1, ... EVSEk) et/ou d'un temps de charge réservé avant une arrivée d'un véhicule électrique (EV1, EV2, ... EVj) à charger au niveau du poste de charge (1).

15. Système pour la charge de véhicules électriques, de préférence pour la réalisation avec le procédé selon l'une quelconque des revendications 1 à 11, comprenant un poste de charge (1) selon l'une quelconque des revendications 12 à 14 et un réseau d'alimentation électrique (2), raccordé via un seul raccordement (C1) au poste de charge (1), de préférence dans lequel le réseau d'alimentation électrique (2) fournit au moins partiellement une électricité issue d'énergies renouvelables au poste de charge.
